# EUROPÄISCHE PATENTSCHRIFT

(11) **EP 2 425 194 B1**
(45) Veröffentlichungstag und Bekanntmachung des Hinweises auf die Patenterteilung: **03.07.2013**
(21) Anmeldenummer: 10715255.5
(22) Anmeldetag: 27.04.2010
(51) Int. Cl.: F28D 7/16, F28F 13/00, F28F 9/02, C08F 6/00

(54) **ROHRBÜNDELWÄRMEÜBERTRÄGER UND VERFAHREN ZUR ENTFERNUNG VON FLÜCHTIGEN STOFFEN AUS EINER POLYMERLÖSUNG**
TUBE BUNDLE HEAT EXCHANGER AND PROCESS TO REMOVE PARTICLES FROM A POLYMERIC SOLUTION
ÉCHANGEUR DE CHALEUR À FAISCEAU DE TUBE ET PROCÉDÉ DE FILTRAGE DE PARTICULES SOLIDES D'UNE SOLUTION DE POLYMÈRE

(30) Priorität: 29.04.2009 EP 09159012
(43) Veröffentlichungstag der Anmeldung: 07.03.2012
(73) Patentinhaber: Styrolution GmbH, 60325 Frankfurt am Main (DE)
(72) Erfinder: GÜNTHERBERG, Norbert, 67346 Speyer (DE); BARDON, Rainer, 67125 Dannstadt-Schauernheim (DE); HEINEN, Hartmut, 67067 Ludwigshafen (DE); SAUER, Michael, 68766 Hockenheim (DE); LEBER, Ludger, 67125 Dannstadt-Schauernheim (DE); FISCHER, Wolfgang, 69190 Walldorf (DE)
(74) Vertreter: Jacobi, Markus Alexander
(86) Internationale Anmeldenummer: PCT/EP2010/055583
(87) Internationale Veröffentlichungsnummer: WO 2010/125037

(56) Entgegenhaltungen:
- EP-A1- 1 400 337
- WO-A1-02/00740
- WO-A1-02/090860
- WO-A1-2007/042529

## Beschreibung

Die Erfindung betrifft einen Rohrbündelwärmeüberträger zur Entfernung von flüchtigen Stoffen aus einer Polymerlösung durch Entgasung, der in einem von einem fluiden Wärmeträger durchströmten Mantelraum ein Bündel von parallel zueinander und vertikal angeordneten Rohren umfasst, wobei die Rohre jeweils mit ihrem oberen Ende in einem oberen Rohrboden und mit ihrem unteren Ende in einem unteren Rohrboden befestigt sind und von der zu entgasenden Polymerlösung in Richtung der Schwerkraft durchströmt werden. Weiterhin betrifft die Erfindung Verfahren zur Entfernung von flüchtigen Stoffen aus einer Polymerlösung durch Entgasung in einem Rohrbündelwärmeüberträger sowie die Verwendung des besagten Rohrbündelwärmeüberträgers.

Thermoplastische Polymere, wie Polystyrol (PS), schlagzäh modifiziertes PS (HIPS) oder Styrol-Acrylnitril-Copolymere (SAN) werden häufig nach dem LösungsPolymerisationsverfahren hergestellt. Um die polymeren Wertstoffe zu gewinnen besteht ein wesentlicher Verfahrensschritt in der Entfernung von flüchtigen Stoffen aus der nach der Polymerisation erhaltenen Polymerlösung, insbesondere von nicht umgesetzten Monomeranteilen, niedermolekularen Reaktionsprodukten (Oligomeren), Zersetzungsprodukten, Hilfsstoffen und vor allem Lösungsmitteln.

Die Isolierung der flüchtigen Stoffe aus Polymerlösungen erfolgt häufig durch Entgasung, wobei die flüchtigen Stoffe durch Wärmezufuhr und gegebenenfalls Druckabsenkung in den gasförmigen Zustand übergeführt und in diesem von den schmelzflüssigen Polymeren abgetrennt werden.

Für die apparative Durchführung der Entgasung sind eine Vielzahl von Verfahrensvarianten bekannt, wobei insbesondere im nieder- und mittelviskosen Bereich zu entgasender Polymerlösungen sich die Entgasung in Rohrbündelwärmeüberträgern besonders bewährt hat. Hierbei handelt es sich um relativ wenig störanfällige Apparate, ohne mechanisch bewegte Teile.

Zu Entgasung einsetzbare Rohrbündelwärmeüberträger bestehen, wie auch herkömmliche Rohrbündelapparate, aus einem Bündel von parallel zueinander und vertikal angeordneten (d.h. parallel zueinander und parallel zur Richtung der Erdanziehungskraft angeordneten) Rohren, die an beiden Enden jeweils in einem Rohrboden befestigt sind. Die Polymerlösung wird den Rohren zugeführt und in diesen entgast; durch den Mantelraum zwischen den Rohren wird ein Wärmeträger geleitet, der die Polymerlösung bzw. -schmelze sowie die Entspannungsprodukte der Polymerlösung erhitzt. Insbesondere bei großen Apparaten, mit einer Vielzahl von Rohren, ist es für eine gleichmäßige Produktqualität erforderlich, die zu entgasende Polymerlösung gleichmäßig auf sämtliche Rohre zu verteilen.

Die WO-A 02/00740, die den Oberbegriff des Anspruchs 1 offenbart, beschreibt einen Rohrbündelwärmeüberträger zur Entgasung von Polymerlösungen in einer ersten Entgasungsstufe, wobei zur gleichmäßigen Verteilung des in das Rohrbündel eintretenden Stoffstromes in die einzelnen Rohre eine Verteilerplatte (Lochplatte) vorgesehen sein kann, die in dem Raum vor den Rohren einen erhöhten Druckverlust bewirkt. Das Verfahren soll insbesondere so betrieben werden, dass innerhalb der Rohre keine Blenden oder Verengungen vorgesehen sind, und dass somit der Druckverlust der Strömung in den Rohren gering ist. Nach dem Verfahren der WO-A 02/00740 wird dem Rohrbündelwärmeüberträger in einer zweiten Entgasungsstufe ein Strangentgaser nachgeschaltet, der eine noch weitergehende Entfernung flüchtiger Stoffe bewirkt.

In den WO-A 07/54504 und WO-A 07/42529 werden Rohrbündelwärmeüberträger zur Entgasung von Polymerlösungen beschrieben, die u.a. zur Erzeugung einer, bevorzugt sprunghaften, Druckabsenkung zwischen Rohreinlass und Entgasungsbereich im Rohrinneren spezielle Einbauten innerhalb der Rohre aufweisen.

Beim Einsatz bekannter Rohrbündelwärmeüberträger und den genannten Verfahren zur Entgasung von Polymerlösungen kommt es zeitweise zur Bildung von Ablagerungen und/oder Verstopfungen an der Eintrittsstelle der zu entgasenden Polymerlösung in die einzelnen Rohre des Rohrbündelwärmeüberträgers. Dadurch wird in regelmäßigen Zeitabständen eine Reinigung von Teilen des Rohrbündelwärmeüberträgers oder gar der Austausch einzelner Rohre und/oder ggf. vorhandener Rohreinlassdüsen notwendig. Mehrtägige Ausfallzeiten mit entsprechend hohen Produktionsausfällen und Kosten sind die Folge. Weiterhin können sich diese Ablagerungen lösen und mit dem Produktstrom ausgetragen werden, wobei sie Verengungen im Transportweg des Produktstroms verstopfen und/oder im Polymer verbleiben und dieses verunreinigen können.

Aufgabe der vorliegenden Erfindung war es daher, Rohrbündelwärmeüberträger und Verfahren zur Entgasung von Polymerlösungen zu finden, die gegenüber bekannten Vorrichtungen und Verfahren weniger häufig notwendigen Reinigungs- oder Wartungsabstellungen unterliegen und die den Anteil an sichtbaren Verschmutzungen im Polymer minimieren.

Demgemäß wurden die eingangs genannten Rohrbündelwärmeüberträger zur Entfernung von flüchtigen Stoffen aus einer Polymerlösung durch Entgasung gefunden, wobei erfindungswesentlich ist, dass auf der Oberseite des oberen Rohrbodens ein mehrlagiges (d.h. mindestens zweilagiges) Drahtgewebe angebracht ist, dessen feinmaschigste Lage eine Maschenweite von 50 µm bis 1000 µm aufweist.

Die erfindungsgemäßen Rohrbündelwärmeüberträger, Verfahren und Verwendungen ermöglichen es, Polymerlösungen mit weniger häufigen Reinigungs- oder Wartungsabstellungen zu entgasen, als dies mit bekannten Vorrichtungen und Verfahren möglich ist und Polymere herzustellen, die deutlich weniger sichtbare Verunreinigungen aufweisen.

Die erfindungsgemäßen Rohrbündelwärmeüberträger, Verfahren und Verwendungen werden im Folgenden beschrieben.

Rohrbündelwärmeüberträger zur Entfernung von flüchtigen Stoffen aus einer Polymerlösung durch Entgasung, die in einem von einem fluiden Wärmeträger durchströmten Mantelraum ein Bündel von parallel zueinander und vertikal angeordneten Rohren umfassen, wobei die Rohre jeweils mit ihrem oberen Ende in einem oberen Rohrboden und mit ihrem unteren Ende in einem unteren Rohrboden befestigt sind und von der zu entgasenden Polymerlösung in Richtung der Schwerkraft durchströmt werden, sind dem Fachmann bekannt und in der Literatur beschrieben (s. beispielsweise WO-A 02/00740, WO-A 07/54504 und WO-A 07/42529).

Der erfindungsgemäße Rohrbündelwärmeüberträger wird bevorzugt in der Weise ausgelegt, dass der wärmeträgerseitige Wärmeübergangskoeffizient zwischen 500 und 2.000 W/m2/K, bevorzugt 800 bis 1.200 W/m2/K, beträgt.

Der Rohrbündelwärmeüberträger umfasst bevorzugt 100 bis 10000, bevorzugt 450 bis 3500 Rohre, besonders bevorzugt 1500 bis 1700 Rohre. Die Länge der Rohre des Rohrbündelwärmeüberträgers liegt üblicherweise im Bereich zwischen 0,3 und 10 m, bevorzugt zwischen 0,5 und 6 m, weiter bevorzugt zwischen 1,0 und 3 m. Die Rohre weisen bevorzugt Innendurchmesser zwischen 5 und 30 mm, bevorzugt zwischen 8 und 25 mm, weiter bevorzugt zwischen 10 und 18 mm auf.

Zur Verteilung der Polymerlösung auf die einzelnen Rohre des Rohrbündelwärmeüberträgers können in einer bevorzugten Ausführungsform zwischen dem oberen Rohrboden und dem mehrlagigen Drahtgewebe eine Lochplatte oder ein Verteilerboden angebracht sein.

Die Rohre des Rohrbündelwärmeüberträgers werden durch einen durch den Mantelraum um die Rohre strömenden flüssigen oder gasförmigen Wärmeträger beheizt. Hierbei ist es möglich, dass ein einziger Wärmeträgerkreislauf vorgesehen ist, es ist jedoch auch möglich, insbesondere bei Beheizung mit einem flüssigen Wärmeträger, mehrere Wärmeträgerkreisläufe vorzusehen, um einzelne, unterschiedlich temperierte Zonen zu gewährleisten. Dies kann insbesondere erforderlich sein, um unterschiedliche Komponenten, mit jeweils unterschiedlichen Entgasungseigenschaften, zu entfernen.

Als gasförmige Wärmeträger sind beispielsweise Heißdampf oder Diphyldampf möglich. Bevorzugt wird ein flüssiger Wärmeträger, insbesondere ein Wärmeträgeröl, eingesetzt.

Übliche Wärmeträgertemperaturen liegen im Bereich von 100 bis 380°C, bevorzugt von 120 bis 350°C, weiter bevorzugt von 130 bis 340°C.

Das untere Ende der Rohre des Rohrbündelwärmeüberträgers mündet in einen Entgasungsbereich, an den ein Vakuum angelegt ist, häufig im Bereich von 5 bis 100 mbar, bevorzugt von 12 bis 70 mbar, weiter bevorzugt von 20 bis 50 mbar.

In einer bevorzugten Ausführungsform des Rohrbündelwärmeüberträgers sind die Rohre mit Einlassdüsen und/oder Einbauten zur Verringerung des freien Durchtrittsquerschnitts der Rohre versehen. Bevorzugte Ausführungsformen sind beispielsweise in WO-A 07/54504 und WO-A 07/42529 beschrieben.

Die erfindungsgemäßen Rohrbündelwärmeüberträger können weiterhin verschiedene Einbauten im Mantelraum zur Steuerung der Strömungsrichtung des Wärmeträgers aufweisen, wie dies in WO-A 07/42529 beschrieben ist.

Bei den erfindungsgemäßen Rohrbündelwärmeüberträgern ist an der Oberseite des oberen Rohrbodens ein mehrlagiges Drahtgewebe angebracht, dessen feinmaschigste Lage eine Maschenweite von 50 µm bis 1000 µm, bevorzugt von 100 µm bis 800 µm, besonders bevorzugt von 200 µm bis 750 µm, aufweist.

Alle im Rahmen der vorliegenden Erfindung genannten Maschenweiten sind die größten freien Strecken zwischen jeweils zwei benachbarten parallelen Kettdrähten und jeweils zwei benachbarten parallelen Schussdrähten oder - im Fall von Drahtgeweben mit nicht-rechtwinkligen Maschen - die größte freie Strecke zwischen den jeweils eine Masche bildenden Gewebedrähten.

Mehrlagige Drahtgewebe sind an sich bekannt (beispielsweise aus EP-A 1 400 337) und werden beispielsweise im Handel für Schmelzefiltrationszwecke oder als Anströmboden für Wirbelschichtreaktoren angeboten. Sie können aber auch aus an sich bekannten Teilen gefertigt werden.

Mechanisch sehr stabil und daher bevorzugt sind mehrlagig aufgebaute Drahtgewebe aus zwei oder drei oder mehr, beispielsweise bis zu 30 Lagen, bevorzugt 2 bis 10 Lagen. Bevorzugt werden dabei mehrlagig aufgebaute Drahtgewebe, die eine grob gewebte, großmaschige aber mechanisch stabile Trägeriage (Stützgewebe) haben und darauf aufbauend immer engermaschigere und feiner gewebte Zwischen- und Filterlagen aufweisen (sogenannte Metalldrahtgewebe-Verbundplatten (MVP)). Bevorzugte MVP besitzen eine Trägerlage mit einer Maschenweite von 1 mm bis 15 mm bevorzugt von 2 mm bis 10 mm, besonders bevorzugt von 3 mm bis 7 mm, und eine oder mehrere weitere Lagen, von denen die feinmaschigste Lage eine Maschenweite von 50 µm bis 1000 µm, bevorzugt von 100 µm bis 800 µm, besonders bevorzugt von 200 µm bis 750 µm, aufweist.

Für die meisten Anwendungen ist es bevorzugt, dass die feinmaschigste Lage des mehrlagigen Drahtgewebes dem oberen Rohrboden abgewandt ist, d.h. der Strömung der zu entgasenden Polymerlösung zugewandt ist.

Die Webart kann für alle Lagen der mehrlagigen Drahtgewebe gleich sein. Es ist aber auch möglich, dass die Webart für einige Lagen gleich ist und sich dann ändert oder sich von Lage zu Lage ändert. Webart und die Anzahl der Lagen richten sich nach der jeweiligen Aufgabe, insbesondere nach der benötigten mechanischen Festigkeit oder den Druckverhältnissen.

Um die mechanische Festigkeit der mehrlagigen Drahtgewebe zu erhöhen, können die einzelnen Lagen miteinander versintert sein.

Die Werkstoffe, aus denen die mehrlagigen Drahtgewebe gefertigt sind, richten sich nach dem Anwendungszweck. In der Regel handelt es sich um verzinkte oder verzinnte unlegierte Stähle, NiC(-Kohlenstoff) -Stähle, Cr-Stähle, nichtrostende Stähle wie martensitische oder austenistische Stähle der Wertstoffgruppen 1.43 (CrNi- Stähle) oder 1.44 (CrNiMo-Stähle). Es kommen aber auch hochhitzebeständige Stähle in Betracht sowie solche aus Kupfer-, Nickel-, Titan- oder Aluminiumlegierungen. Es ist auch möglich, dass polierte, insbesondere glatte bis spiegelglatte metallische Materialien eingesetzt werden. Auch sind metallische Oberflächen denkbar, die den sogenannten Lotuseffekt aufweisen. Die meisten Anwendungen können mit den Werkstoffgruppen 1.40 bis 1.45 abgedeckt werden, worunter Chrom-Nickel-Molybdän-Stähle am häufigsten eingesetzt werden.

Die mehrlagigen Drahtgewebe können einfach durch Rückspülen, Abbürsten oder Ausglühen von Rückständen oder Ablagerungen gereinigt werden, da im Allgemeinen keine oder nur wenig Tiefenbeladung innerhalb der Gewebeschichten auftritt.

Die erfindungsgemäßen Verfahren zur Entfernung von flüchtigen Stoffen aus einer Polymerlösung durch Entgasung in einem Rohrbündelwärmeüberträger, wobei der Rohrbündelwärmeüberträger in einem von einem fluiden Wärmeträger durchströmten Mantelraum ein Bündel von parallel zueinander und vertikal angeordneten Rohren umfasst, und wobei die Rohre jeweils mit ihrem oberen Ende in einem oberen Rohrboden und mit ihrem unteren Ende in einem unteren Rohrboden befestigt sind und von der zu entgasenden Polymerlösung in Richtung der Schwerkraft, d.h. von oben nach unten, durchströmt werden, und wobei durch Druckabsenkung und Wärmezufuhr innerhalb der Rohre die Entgasung der Polymerlösung erfolgt, zeichnen sich dadurch aus, dass die oben beschriebenen Ausführungsformen der erfindungsgemäßen Rohrbündelwärmeüberträger als Vorrichtung zum Entgasen verwendet werden.

Die zu entgasende Polymerlösung kommt üblicherweise direkt aus dem Polymerisationsreaktor, beispielsweise einem kontinuierlich betriebenen Rührkessel, einer Rührkesselkaskade oder einem Rohrreaktor und steht unter dem Druck und der Temperatur, die weitgehend den Polymerisationsbedingungen entsprechen. Es ist aber auch möglich, durch druckaufbauende Aggregate, beispielsweise Schmelzepumpen, Extruder usw. und gegebenenfalls Wärmetauscher das Druck- und Temperatumiveau gegenüber den Polymerisationsbedingungen anzuheben.

Üblich sind insbesondere Eingangstemperaturen am Rohrbündelwärmeüberträger zwischen 100 und 300°C, bevorzugt zwischen 120 und 280°C, weiter bevorzugt zwischen 150 und 250°C und Eingangsdrücke im Bereich zwischen 5 und 80 bar absolut, bevorzugt zwischen 8 und 60 bar absolut, weiter bevorzugt zwischen 10 und 40 bar absolut. Weitere Verfahrensdetails wurden bereits obenstehend bei der Beschreibung der erfindungsgemäßen Rohrbündelwärmeüberträger offenbart (beispielsweise Wärmeträgertemperaturen, bevorzugte Drucke im Entgasungsbereich etc.) und sind für die erfindungsgemäßen Verfahren entsprechend anwendbar.

Die Polymerlösung, die dem Rohrbündelwärmeüberträger zwecks Entgasung zugeführt wird, hat üblicherweise einen Polymergehalt zwischen 50 und 95 Gew.-% der Polymerlösung, bevorzugt zwischen 45 und 90 Gew.-% und weiter bevorzugt zwischen 60 und 85 Gew.-%.

Übliche Durchsätze für die Polymerlösung sind zwischen 0,5 und 30 kg Polymerlösung pro Stunde und Rohr, bevorzugt zwischen 1 und 25 kg Polymerlösung pro Stunde und Rohr, weiter bevorzugt zwischen 2 und 20 kg Polymerlösung pro Stunde und Rohr.

In einer bevorzugten Ausführungsform der erfindungsgemäßen Verfahren wird nach der Entgasung der Polymerlösung in dem Rohrbündelwärmeüberträger ein weiterer Entgasungsschritt zur Entfernung noch verbliebener flüchtiger Stoffe aus der Polymerlösung in einem Strangentgaser durchgeführt. Die weitere Ausgestaltung der zweistufigen Entgasungsverfahren ist dem Fachmann grundsätzlich bekannt und beispielsweise in WO-A 02/00740 beschrieben.

Der Gehalt der Polymerlösung an flüchtigen Stoffen, beispielsweise Restmonomere, Oligomere oder Lösungsmittel, vor der Entgasung kann in weiten Bereichen schwanken und ist stark abhängig von der Art des Polymers und der Art des Herstellverfahrens. Für eine nach dem Lösungspolymerisationsverfahren hergestellte SAN-Lösung kann der Gehalt an flüchtigen Stoffen beispielsweise im Bereich von 20 Gew.-% bis 80 Gew.-%, bevorzugt von 30 Gew.-% bis 70 Gew.-%, besonders bevorzugt von 40 Gew.-% bis 60 Gew.-%, liegen (jeweils bezogen auf das Gesamtgewicht der Polymerlösung und bestimmt mittels Gaschromatographie).

Der Gehalt der Polymerlösung bzw. der Polymerschmelze an flüchtigen Stoffen nach der Entgasung in den erfindungsgemäßen Rohrbündelwärmeüberträgern liegt in der Regel im Bereich von von 100 ppm bis 10000 ppm, bevorzugt von 150 ppm bis 3000 ppm, besonders bevorzugt von 200 ppm bis 1000 ppm (jeweils bezogen auf das Gesamtgewicht der Polymerlösung bzw. -schmelze und bestimmt mittels Gaschromatographie).

Durch den beschriebenen weiteren Entgasungsschritt in einem Strangentgaser, der nach der Entgasung in den erfindungsgemäßen Rohrbündelwärmeüberträgern durchgeführt werden kann, kann eine noch weitergehende Abreicherung flüchtiger Stoffe erreicht werden.

Die Weiterverarbeitung der entgasten Polymerschmelze zu beispielsweise Granulat oder Formteilen ist dem Fachmann bekannt und in der Literatur beschrieben.

Die erfindungsgemäßen Rohrbündelwärmeüberträger, Verfahren und Verwendungen ermöglichen es, Polymerlösungen mit weniger häufigen Reinigungs- oder Wartungsabstellungen zu entgasen, als dies mit bekannten Vorrichtungen und Verfahren möglich ist. Ferner ermöglichen die erfindungsgemäßen Rohrbündelwärmeüberträger, Verfahren und Verwendungen es, Polymere herzustellen, die deutlich weniger sichtbare Verunreinigungen aufweisen. Weiterhin bewirken die mehrlagigen Drahtgewebe eine gleichmäßigere Verteilung der Polymerlösung auf die einzelnen Rohre des Rohrbündelwärmeüberträgers.

Die Erfindung wird nachstehend anhand von Beispielen näher erläutert.

### Beispiele:

### Bsp. V-1 (zum Vergleich):

Eine durch Lösungspolymerisation hergestellte SAN-Lösung wurde in einem Rohrbündelwärmeüberträger, der in einem von einem fluiden Wärmeträger durchströmten Mantelraum ein Bündel von parallel zueinander und vertikal angeordneten Rohren umfasste, wobei die Rohre jeweils mit ihrem oberen Ende in einem oberen Rohrboden und mit ihrem unteren Ende in einem unteren Rohrboden befestigt waren und von der zu entgasenden Polymerlösung in Richtung der Schwerkraft durchströmt wurden, unter üblichen Bedingungen entgast. Zur gleichmäßigeren Strömungsverteilung war jedes Rohr an seiner Eintrittsöffnung mit einem Einbau zur Verringerung des freien Durchtrittsquerschnitts der Rohre, im folgenden "Stopfen" genannt, versehen, der mit einer zentralen Bohrung von 1,8 mm Durchmesser und parallel zur Schwerkraft mit einer Bohrungslänge von 25 mm versehen war. Es wurde ein Gemisch von 65 Gew.-% SAN und 35 Gew.-% flüchtiger Bestandteile (umfassend Lösemittel und Restmonomere wie Styrol, Acrylnitril und Ethylbenzol) bei einer Temperatur von 170°C auf den oberen Rohrboden des Rohrbündelwärmeüberträgers gegeben. Der Durchsatz pro Stopfen betrug 6,2 kg/h, der Druck betrug vor dem Stopfen 30 bar, nach dem Stopfen 1 bar. Der Rohrbündelwärmeüberträger war in drei Heizzonen (150°C/195°C/330°C) unterteilt. Die Temperatur des Austragstopfes unterhalb des unteren Rohrbodens des Rohrbündelwärmeüberträgers betrug 250°C, der Druck in diesem Austragstopf betrug 30 mbar. Der Restgehalt an flüchtigen Substanzen der nach der Entgasung im Rohrbündelwärmeüberträger erhaltenen Polymerschmelze betrug 856 ppm (bezogen auf das Gesamtgewicht der Polymerschmelze und bestimmt mittels Gaschromatographie). Die Betriebszeit bis zum Auftreten eines nicht mehr akzeptablen Gehaltes an sichtbaren Verunreinigungen im Polymer betrug 6 bis 12 Monate.

### Bsp. 2:

Die gleiche wie in Bsp. V-1 eingesetzte durch Lösungspolymerisation hergestellte SAN-Lösung wurde in einem Rohrbündelwärmeüberträger, der sich von dem in Bsp. V-1 eingesetzten Rohrbündelwärmeüberträger lediglich durch das Vorhandensein eines mehrlagigen Drahtgewebes, dessen feinmaschigste Lage eine Maschenweite von 500 µm aufwies, auf der Oberseite des oberen Rohrbodens unterschied, unter ansonsten zu Bsp. V-1 identischen Bedingungen entgast. Der Restgehalt an flüchtigen Substanzen der nach der Entgasung im Rohrbündelwärmeüberträger erhaltenen Polymerschmelze betrug 847 ppm (bezogen auf das Gesamtgewicht der Polymerschmelze und bestimmt mittels Gaschromatographie). Die Betriebszeit bis zum Auftreten eines nicht mehr akzeptablen Gehaltes an sichtbaren Verunreinigungen im Polymer betrug 24 bis 30 Monate.

### Bsp. V-3 (zum Vergleich)

Die gleiche wie in Bsp. V-1 eingesetzte durch Lösungspolymerisation hergestellte SAN-Lösung wurde in einem Rohrbündelwärmeüberträger, der sich von dem in Bsp. V-1 eingesetzten Rohrbündelwärmeüberträger lediglich durch das Vorhandensein eines handelsüblichen Schmelzefilters mit einer Porenweite von 250 µm in der dem Rohrbündelwärmeüberträger nachgeschalteten Schmelzeableitung unterschied, unter ansonsten zu Bsp. V-1 identischen Bedingungen entgast. Nach einer Laufzeit von mehreren Wochen musste der Schmelzefilter immer häufiger gewechselt werden. Der Rohrbündelwärmeüberträger musste wegen Verstopfens eines Teils der Stopfen nach einem vergleichbaren Zeitraum wie in Bsp. V-1 (6-12 Monate) abgeschaltet und gereinigt werden.

Bei der erfindungsgemäßen Entgasung gemäß Bsp. 2 waren die störungsfreien Betriebszeiten zwischen zwei Abstellungen aufgrund notwendiger Reinigungs- und Wartungsarbeiten am Rohrbündelwärmeüberträger zwei- bis dreimal so lang wie bei den Entgasungen gemäß Bsp. V-1 und dem sogar mit zusätzlichem apparativen Aufwand durchgeführten Bsp. V-3.

Die Beispiele belegen, dass die erfindungsgemäßen Rohrbündelwärmeüberträger, Verfahren und Verwendungen es ermöglichen, Polymerlösungen mit weniger häufigen Reinigungs- oder Wartungsabstellungen zu entgasen und über zwei- bis dreimal so lange störungsfreie Betriebszeiten Polymere mit einem akzeptierbar geringen Gehalt an sichtbaren Verunreinigungen herzustellen, als dies mit bekannten Vorrichtungen und Verfahren möglich ist.

## Patentansprüche

1. Rohrbündelwärmeüberträger zur Entfernung von flüchtigen Stoffen aus einer Polymerlösung durch Entgasung,
der in einem von einem fluiden Wärmeträger durchströmten Mantelraum ein Bündel von parallel zueinander und vertikal angeordneten Rohren umfasst,
wobei die Rohre jeweils mit ihrem oberen Ende in einem oberen Rohrboden und mit ihrem unteren Ende in einem unteren Rohrboden befestigt sind und von der zu entgasenden Polymerlösung in Richtung der Schwerkraft durchströmt werden,
**dadurch gekennzeichnet, dass** auf der Oberseite des oberen Rohrbodens ein mehrlagiges Drahtgewebe angebracht ist, dessen feinmaschigste Lage eine Maschenweite von 50 µm bis 1000 µm aufweist.

2. Rohrbündelwärmeüberträger nach Anspruch 1, **dadurch gekennzeichnet, dass** das mehrlagige Drahtgewebe eine Trägerlage mit einer Maschenweite von 1 mm bis 15 mm und ein oder mehrere weitere Lagen, von denen die feinmaschigste Lage eine Maschenweite von 50 µm bis 1000 µm aufweist, umfasst.

3. Rohrbündelwärmeüberträger nach Ansprüchen 1 bis 2, **dadurch gekennzeichnet, dass** die feinmaschigste Lage des mehrlagigen Drahtgewebes dem oberen Rohrboden abgewandt ist.

4. Rohrbündelwärmeüberträger nach Ansprüchen 1 bis 3, **dadurch gekennzeichnet, dass** die Rohre mit Einlassdüsen und/oder Einbauten zur Verringerung des freien Durchtrittsquerschnitt der Rohre versehen sind.

5. Rohrbündelwärmeüberträger nach Ansprüchen 1 bis 4, **dadurch gekennzeichnet, dass** zwischen dem oberen Rohrboden und dem mehrlagigen Drahtgewebe eine Lochplatte oder ein Verteilerboden angebracht ist.

6. Verfahren zur Entfernung von flüchtigen Stoffen aus einer Polymerlösung durch Entgasung in einem Rohrbündelwärmeüberträger,
wobei der Rohrbündelwärmeüberträger in einem von einem fluiden Wärmeträger durchströmten Mantelraum ein Bündel von parallel zueinander und vertikal angeordneten Rohren umfasst,
und wobei die Rohre jeweils mit ihrem oberen Ende in einem oberen Rohrboden und mit ihrem unteren Ende in einem unteren Rohrboden befestigt sind und von der zu entgasenden Polymerlösung in Richtung der Schwerkraft durchströmt werden,
und wobei durch Druckabsenkung und Wärmezufuhr innerhalb der Rohre die Entgasung der Polymerlösung erfolgt,
**dadurch gekennzeichnet, dass** ein Rohrbündelwärmeüberträger gemäß einem der Ansprüche 1 bis 5 eingesetzt wird.

7. Verfahren nach Anspruch 6, **dadurch gekennzeichnet, dass** nach der Entgasung der Polymerlösung in dem Rohrbündelwärmeüberträger ein weiterer Entgasungsschritt zur Entfernung noch verbliebener flüchtiger Stoffe aus der Polymerlösung in einem Strangentgaser erfolgt.

8. Verwendung des Rohrbündelwärmeüberträgers nach einem der Ansprüche 1 bis 5 zur Entfernung von flüchtigen Stoffen aus einer Polymerlösung durch Entgasung.

## Claims

1. A shell-and-tube heat exchanger for removing volatile substances from a polymer solution by degassing,
which comprises a bundle of parallel vertical tubes arranged within a shell through which a fluid heat transfer medium flows,
with the tubes each being fixed at their upper end in an upper tube plate and at their lower end in a lower tube plate and the polymer solution to be degassed flowing through the tubes in the direction of gravity,
wherein a multilayer woven wire mesh whose finest-meshed layer has a mesh opening of from 50 µm to 1000 µm is installed on the upper side of the upper tube plate.

2. The shell-and-tube heat exchanger according to claim 1, wherein the multilayer woven wire mesh comprises a support layer having a mesh opening of from 1 mm to 15 mm and one or more further layers of which the finest-meshed layer has a mesh opening of from 50 µm to 1000 µm.

3. The shell-and-tube heat exchanger according to claim 1 or 2, wherein the finest-meshed layer of the multilayer woven wire mesh faces away from the upper tube plate.

4. The shell-and-tube heat exchanger according to any of claims 1 to 3, wherein the tubes are provided with inlet nozzles and/or internal fittings for reducing the free cross section of the tubes.

5. The shell-and-tube heat exchanger according to any of claims 1 to 4, wherein a perforated plate or a distributor plate is installed between the upper tube plate and the multilayer woven wire mesh.

6. A method of removing volatile substances from a polymer solution by degassing in a shell-and-tube heat exchanger,
with the shell-and-tube heat exchanger comprising a bundle of parallel vertical tubes within a shell through which a fluid heat transfer medium flows
and the tubes each being fixed at their upper end in an upper tube plate and at their lower end in a lower tube plate and the polymer solution to be degassed flowing through them in the direction of gravity
and degassing of the polymer solution occurring by reducing the pressure and introducing heat within the tubes,
wherein a shell-and-tube heat exchanger according to any of claims 1 to 5 is used.

7. The method according to claim 6, wherein a further degassing step for removing remaining volatile substances from the polymer solution in a continuous degasser is carried out after degassing of the polymer solution in the shell-and-tube heat exchanger.

8. The use of the shell-and-tube heat exchanger according to any of claims 1 to 5 for removing volatile substances from a polymer solution by degassing.

## Revendications

1. Echangeur de chaleur à faisceau de tube pour éliminer des substances volatiles d'une solution de polymère par dégazage,
qui comprend dans un espace de manteau parcouru par un vecteur thermique fluide, un faisceau de tubes disposés parallèlement les uns par rapport aux autres et verticalement,
les tubes étant fixés respectivement à leurs extrémités supérieures dans une plaque tubulaire supérieure et à leurs extrémités inférieures, dans une plaque tubulaire inférieure et étant parcourus par la solution de polymère à dégazer dans le sens de la gravité,
**caractérisé en ce que** sur la face supérieure de la plaque tubulaire supérieure est montée une toile métallique à plusieurs couches dont la couche à mailles les plus fines présente une largeur de maille de 50 µm à 1000 µm.

2. Echangeur de chaleur à faisceau de tube selon la revendication 1, **caractérisé en ce que** la toile métallique à plusieurs couches comprend une couche de support présentant une largeur de maille de 1 mm à 15 mm et une ou plusieurs autres couches parmi lesquelles la couche à mailles les plus fines présente une largeur de maille de 50 µm à 1000 µm.

3. Echangeur de chaleur à faisceau de tube selon les revendications 1 à 2, **caractérisé en ce que** la couche à mailles les plus fines de la toile métallique à plusieurs couches est détournée de là plaque tubulaire supérieure.

4. Echangeur de chaleur à faisceau de tube selon les revendications 1 à 3, **caractérisé en ce que** les tubes sont dotés de buses d'admission et/ou d'éléments encastrés pour réduire la section de passage libre des tubes.

5. Echangeur de chaleur à faisceau de tube selon les revendications 1 à 4, **caractérisé en ce que**, entre la plaque tubulaire supérieure et la toile métallique à plusieurs couches est placée une plaque perforée ou un plateau répartiteur.

6. Procédé d'élimination de substances volatiles d'une solution de polymère par dégazage dans un échangeur de chaleur à faisceau de tube,
dans lequel l'échangeur de chaleur à faisceau de tube comprend dans un espace de manteau parcouru par un vecteur thermique fluide, un faisceau de tubes disposés parallèlement les uns par rapport aux autres et verticalement,
et dans lequel les tubes sont fixés respectivement à leurs extrémités supérieures dans une plaque tubulaire supérieure et à leurs extrémités inférieures, dans une plaque tubulaire inférieure et sont parcourus par la solution de polymère à dégazer dans le sens de la gravité,
et dans lequel par réduction de la pression et apport de chaleur à l'intérieur des tubes, le dégazage de la solution de polymère s'effectue,
**caractérisé en ce qu'**un échangeur de chaleur à faisceau de tube selon l'une des revendications 1 à 5 est utilisé.

7. Procédé selon la revendication 6, **caractérisé en ce que**, après le dégazage de la solution de polymère dans l'échangeur de chaleur à faisceau de tube, une autre étape de dégazage s'effectue pour éliminer des substances volatiles encore restantes de la solution de polymère dans un dispositif de dégazage en continu.

8. Utilisation de l'échangeur de chaleur à faisceau de tube selon l'une des revendications 1 à 5, pour éliminer des substances volatiles d'une solution de polymère par dégazage.
